Europäisches Patentamt

European Patent Office

Office européen des brevets

(19)

(11) Veröffentlichungsnummer: **0 359 094 B1**

# (12) EUROPÄISCHE PATENTSCHRIFT

(45) Veröffentlichungstag der Patentschrift: **16.12.92**

(51) Int. Cl.5: **H04N 7/12**, H04N 7/00

(21) Anmeldenummer: **89116351.1**

(22) Anmeldetag: **05.09.89**

Verbunden mit 89909739.8/0439471
(europäische
Anmeldenummer/Veröffentlichungsnummer)
durch Entscheidung vom 14.08.91.

(54) **Übertragungssystem für ein zeitlich und örtlich hochaufgelöstes Bildsignal.**

(30) Priorität: **13.09.88 DE 3831103**
**13.09.88 DE 3831104**

(43) Veröffentlichungstag der Anmeldung:
**21.03.90 Patentblatt 90/12**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
**EP-A- 0 113 933**
**WO-A-87/05769**
**DE-C- 3 704 777**

**I.E.E.E. TRANSACTIONS ON BROADCASTING,
Band BC-33, Nr. 4, Dezember 1987, Seiten
107-115, IEEE, New York, NY, US; W.E. GLENN
et al.: "High definition television compatible
transmission system"**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Keesen, Heinz-Werner, Dr.-Ing.
Tiestestrasse 5
W-3000 Hannover 1(DE)**
Erfinder: **Peters, Hartmut, Dipl.-ing.
Tiestestrasse 34
W-3000 Hannover 1(DE)**
Erfinder: **Hepper, Dietmar, Dipl.-Ing.
Volgersweg 28
W-3000 Hannover 1(DE)**

EP 0 359 094 B1

I.E.E.E. TRANSACTIONS ON CONSUMER ELECTRONICS "1988 INTERNATIONAL CONFERENCE ON CONSUMER ELECTRONICS, PART 1", Band 34, Nr. 3, August 1988, Seiten 484-492, IEEE, New York, NY, US; W.E. BRETL: "3XNTSC-A "Leapfrog" production standard for HDTV"

PHILIPS TECHNICAL REVIEW, Band 43, Nr. 8, August 1987, Seiten 197-212, Eindhoven, NL; M.J.J.C. ANNEGARN et al.: "HD-MAC: a step forward in the evolution of television technology"

I.E.E.E. TRANSACTIONS ON CIRCUITS AND SYSTEMS, Band CAS-34, Nr. 11, November 1987, Seiten 1432-1439, IEEE, New York, NY, US; G. SCHAMEL: "Pre- and postfiltering of HDTV signals for sampling rate reduction and display up-conversion"

**Beschreibung**

Die Erfindung betrifft ein Verfahren zur Übertragung eines senderseitig gewonnenen, zeitlich und örtlich hochaufgelösten Bildsignals großer Bandbreite über zwei Übertragungskanäle geringerer Bandbreite, sowie einen verbesserten Empfänger für dieses Verfahren.

Stand der Technik

Im Tagungsband des HDTV-Colloquiums 1987, Ottawa, vom 04.-08.10.1987 ist von William E. Glenn und Karen G. Glenn vom New York Institute of Technology unter "Improved HDTV with Compatible Transmission" auf den Seiten 4.5.1-4.5.12 ein Übertragungssystem vorgeschlagen worden, das sowohl den Empfang eines hochaufgelösten Fernsehsignals, im folgenden HDTV-Signal genannt, als auch den eines Standard-Fernsehsignals, im folgenden Standard-TV-Signal genannt, ermöglicht. Dazu wird ein von einer Quelle geliefertes HDTV-Signal mittels eines digitalen Signalprozessors durch eine zweidimensionale örtliche Filterung dahingehend aufgespalten, daß als Ergebnis ein Standard-TV-Signal und ein Signal, welches die hohen örtlichen Frequenzanteile des HDTV-Signals liefert, entsteht.
Diese beiden Signale werden getrennt über zwei separate bandbegrenzte Kanäle übertragen, wobei der eine Kanal das Standard-TV-Signal überträgt und der als Zusatzkanal fungierende zweite Kanal die hohen örtlichen Frequenzanteile des HDTV-Signals.
Auf der Empfängerseite ist dann mittels eines Standard-TV-Empfängers das Standard-TV-Signal zu empfangen.
Ein geeigneter HDTV-Empfänger ist durch die Auswertung der Signale beider Kanäle in der Lage, das von der Quelle gelieferte Bild zu rekonstruieren und wiederzugeben.
Aus den Informationen des Zusatzkanals allein läßt sich kein örtlich hochaufgelöstes Bild rekonstruieren und wiedergeben.

Erfindung

Der Erfindung liegt die Aufgabe zugrunde, ein Verfahren zur Übertragung eines hochaufgelösten Bildsignals anzugeben, welches unter Verwendung zweier Übertragungskanäle geringer Bandbreite auf der Empfängerseite die Rekonstruktion von hochaufgelöster Bildinformation auch bei Empfang nur eines Kanals ermöglicht.

Diese Aufgabe wird durch die im Patentanspruch 1 angegebenen Merkmale gelöst. Vorteilhafte Weiterbildungen des Verfahrens sind in den Unteransprüchen 2 bis 4 angegeben.

Der Erfindung liegt weiter die Aufgabe zugrunde, einen verbesserten Empfänger für dieses Verfahren anzugeben.
Diese Aufgabe wird durch die im Patentanspruch 5 angegebenen Merkmale gelöst. Vorteilhafte Weiterbildungen des verbesserten Empfängers sind in den Unteransprüchen 6 bis 19 angegeben.

Auf der Senderseite wird ein HDTV-Signal mit hoher örtlicher und zeitlicher Auflösung in zwei Signale aufgespalten. Das erste Signal weist eine geringe örtliche, aber hohe zeitliche Auflösung auf und kann durch entsprechende Codierung in ein Standard-TV-Signal, z.B. PAL, Secam, NTSC oder D2-MAC oder digital mit oder ohne Datenreduktion, umgesetzt und über einen ersten bandbegrenzten Kanal übertragen werden.

Das zweite Signal weist eine hohe örtliche, aber geringe zeitliche Auflösung auf. Dies kann z.B. durch Auslassen von Bildern, vorzugsweise jedes zweiten Bildes, erreicht werden. Durch einen entsprechenden Coder kann es z.B. in ein HD-MAC-Signal umgesetzt oder auch direkt digital mit oder ohne Datenreduktion über einen zweiten bandbegrenzten Kanal übertragen werden.

Mit Hilfe des ersten Kanals ist auf der Empfängerseite ein vollständiges örtlich nieder- und zeitlich hochaufgelöstes Bildsignal empfangbar.
Über den zweiten Kanal ist gegenüber dem Stand der Technik ein vollständiges zeitlich nieder- und örtlich hochaufgelöstes Bildsignal empfangbar, aus welchem durch geeignete Decodierung und Maßnahmen zur Bildregeneration ein adäquates örtlich hochaufgelöstes Bildsignal, im folgenden HD-Signal genannt, rekonstruierbar ist.
Die Regenerationsmaßnahmen dienen dazu, die durch die empfängerseitig durch Weglassen von Bildern insbesondere bei bewegten Sequenzen verlorengegangene Information weitgehendst zu rekonstruieren.
Um ein vollständiges HDTV-Signal zu regenerieren, sind empfängerseitig beide Kanäle auszuwerten. Dazu wird insbesondere bei Bewegungsdefekten bei der Rekonstruktion des HD-Bildes die zeitlich hochaufgelöste Bildinformation des ersten Kanals herangezogen.
Dem Signal des zweiten Kanals wird eine Information über den korrespondierenden ersten Kanal hinzugefügt. Diese Information kann bei Empfang des zweiten Kanals vom Empfänger dahingehend ausgewertet werden, daß dieser durch eine entsprechende Auswertschaltung den Empfang des ersten Kanals automatisch ermöglicht.
Vorteilhaft ergibt sich somit bei dem erfindungsgemäßen Übertragungssystem die Einführung eines zu den herkömmlichen Übertragungssystemen kompatiblen HDTV-Übertragungssystems, wobei der erste Kanal ein Bildsignal mit einer dem heutigen Fernsehstandard entsprechenden Auflösung bereitstellt und der zweite Kanal ein vollständiges Bildsignal hoher örtlicher Auflösung liefert.

Zeichnungen

Ausführungsbeispiele werden anhand der Zeichnungen im einzelnen erläutert. Diese zeigen in:

Fig.1    ein    2-Kanal-HDTV-Übertragungssystem;

Fig.2    einen    Transcoder    im    Sender (Encoder);

Fig.3    einen    Transcoder    im    Empfänger (Decoder);

Fig.4    einen HD-Encoder (im Sender);

Fig.5    einen HD-Decoder(im Empfänger);

Fig.6    einen Bildregenerator;

Fig.7    ein Beispiel der Funktionsweise eines Bildgenerators;

Fig.8    ein örtlich-zeitliches Filter.

Ausführungsbeispiele

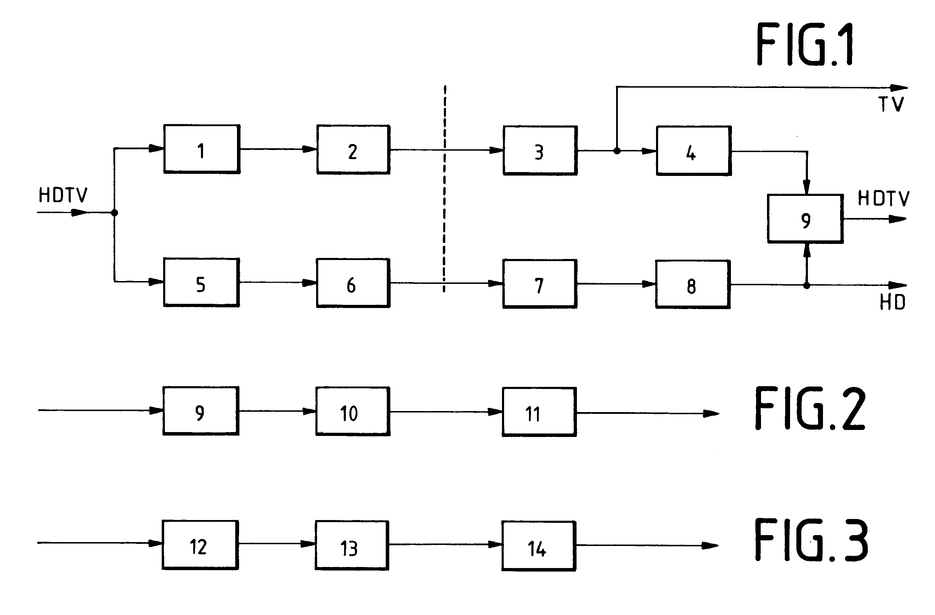

Fig. 1 zeigt ein 2-Kanal-HDTV-Übertragungssystem. Ein von einer Quelle erzeugtes HDTV-Signal wird einer ersten Übertragungsstrecke, bestehend aus einem Transcoder 1, einem TV-Encoder 2, einem TV-Decoder 3 und einem Transcoder 4, und einer zweiten Übertragungsstrecke, bestehend aus einer Bildunterdrückungsschaltung 5, einem HD-Encoder 6, einem HD-Decoder 7 und einer Bildregenerationsschaltung 8, zugeführt.

Der Transcoder 1 der ersten Übertragungsstrecke reduziert durch entsprechende Filterung die horizontale Auflösung des Bildes um 2:1 und die vertikale Auflösung um 3:2. Zudem wird das ohne Zeilensprung vorliegende HDTV-Signal in ein mit Zeilensprung behaftetes Signal umgesetzt, wobei die zeitliche Auflösung erhalten bleibt. Das Ausgangssignal des Transcoders 1 wird dem TV-Encoder 2 zugeführt, der ein Standard TV-Signal erzeugt, z.B. in PAL, Secam, NTSC oder D2-MAC, und dessen Ausgang mit einem ersten Übertragungskanal verbunden ist. Soll das Ausgangssignal des Transcoders jedoch z.B. auf einem digitalen Recorder gespeichert werden, wird es entweder direkt oder über eine Datenreduktionseinrichtung auf den ersten Übertragungs-, d.h. Aufzeichnungskanal gegeben.

Im Empfänger des ersten Übertragungskanals wird das ankommende Standard-TV-Signal im TV-Decoder 3 decodiert. Am Ausgang des TV-Decoders 3 ist dann das Standard-TV-Signal wiedergebbar.

Das HDTV-Signal, das der zweiten Übertragungsstrecke zugeführt wird, wird zur Anpassung an einen bandbegrenzten zweiten Übertragungskanal einer Auslassung von Bildern unterzogen. Mit Hilfe der Bildunterdrückungsschaltung 5 wird z.B. nur jedes zweite Bild übertragen. Vorstellbar ist bei Signalen mit statischem Bildinhalt die Unterdrückung von mehr als nur jedem zweiten Bild, so daß die dann frei werdende Kanalkapazität für die Codierung und Übertragung der übrigen Bilder zur Verfügung steht. Das Ausgangssignal der Bildunterdrückungsschaltung 5 gelangt über den HD-Encoder 6 auf einen zweiten Übertragungskanal. Der HD-Encoder erzeugt entweder ein analoges Signal, z.B. HD-MAC, oder ein digitales Signal, das direkt oder nach Datenreduktion über den Kanal übertragen wird.

Im Empfänger des zweiten Übertragungskanals wird das ankommende Signal dem HD-Decoder 7 zugeführt. Der Ausgang des HD-Decoders 7 ist mit der Bildregenerationsschaltung 8 verbunden, die unter Ausnutzung einer Bewegungsschätzung mittels Blockvergleich eine Rekonstruktion der empfängerseitig ausgelassenen Bilder durchführt. Am Ausgang der Bildregenerationsschaltung 8 ist dann ein HD-Signal mit hoher örtlicher Auflösung und einer Bildfolgefrequenz von z.B. 50 Hz wiedergebbar, jedoch mit möglichen Fehlern im Bereich bewegter Bildinhalte.

Um diese Fehler im Bereich bewegter Bildteile zu minimieren und somit die hohe zeitliche Auflösung des Eingangs-HDTV-Signals zu erzielen, wird mittels des Transcoders 4 aus dem Standard-TV-Signal eine Invertierung der Abtastratenwandlung des Transcoders 1 vorgenommen. Beide Signale, das des Transcoders 4 und das der Bildregenerationsschaltung 8, werden einem Kombinationsfilter 9 zugeführt, das durch geeignete Wichtung ein HDTV-Ausgangssignal hoher zeitlicher und örtlicher Auflösung liefert.

Fig. 2 beschreibt den Transcoder 1 im Sender. Das eingehende HDTV-Signal wird einem horizontalen Transcoderfilter 9 zugeführt, das durch geeignete Filterung die horizontale Abtastrate um 2:1 senkt. Ein grundlegendes Verfahren hierfür wird in Pirsch, P.; Bierling, M.: "Changing the sampling Rate of Video Signals by Rational Factors", Proc. EUSIPCO '83, Signal Processing II: Theories and Applications, EURASIP 1983, S. 171-174, beschrieben. Danach durchläuft das Signal ein vertikales Transcoderfilter 10, das die vertikale Abtastrate um 3:2 senkt. Das Ausgangssignal durchläuft anschließend einen Vertikaltiefpaß, gefolgt von einem Interlacer 11, der eine teilbildabhängige vertikale Unterabtastung von 2:1 zur Erzeugung eines Bildsignals mit Zeilensprung durchführt.

Weist das HDTV-Signal am Eingang des Transcoders 1 z.B. 1440*864 aktive Bildpunkte pro Bild mit einer Bildwiederholfrequenz von 50 Hz und progressiver Abtastung von 1:1 auf, so wird das Bildformat in folgenden Stufen reduziert:

1. 720*864, 50 Hz, 1:1
2. 720*576, 50 Hz, 1:1
3. 720*576, 50 Hz, 2:1

Fig. 3 zeigt den Transcoder 4 im Empfänger. Das ankomme Standard-TV-Signal, in Form digitaler Abtastwerte vorliegend, wird einem Deinterlacer 12 zugeführt, der durch teilbildabhängige Zeilenübernahme und Interpolation der Zwischenzeilen aus einem Bildsignal im Format 720*576, 50 Hz, 2:1 ein Bildsignal im Format 720*576, 50 Hz, 1:1 erzeugt. Dieses Signal wird einem vertikalen Transcoderfilter 13 zugeführt, das durch vertikale Abtastratenwandlung um 2:3 ein Signal im Format 720*864, 50 Hz, 1:1 regeneriert. Mittels eines nachfolgenden horizontalen Transcoderfilters 14 mit einer horizontalen Abtastratenwandlung von 1:2 entsteht ein dem HDTV-Eingangssignal in seinem Format vergleichbares Signal mit 1440*864, 50 Hz, 1:1.

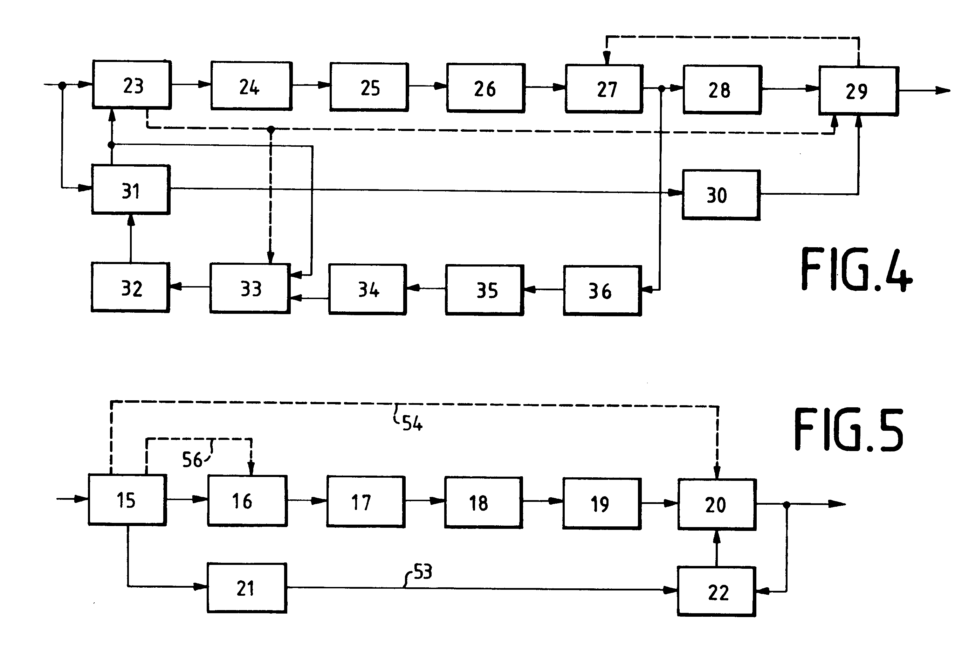

Fig. 4 zeigt den HD-Encoder 6. Das die Bildunterdrückungsschaltung 5 durchlaufende HDTV-Eingangssignal wird sowohl einer Modusauswahlschaltung 23 als auch einer Blocksuchschaltung 31 zugeführt.

In der Modusauswahlschaltung 23 wird durch Vergleich des Eingangssignals mit dem Ausgangssignal der Blocksuchschaltung 31 für die Codierung des Eingangssignals entweder ein Inter- oder ein Intraframe-Modus ausgewählt. Die Codierung geschieht z.B. einheitlich für einen 8*8 Bildpunkte beinhaltenden Block. Sind z.B. die Abweichungen des aktuellen Bildes zum vorherigen Bild groß, dann wird eine Intraframecodierung durchgeführt. Im anderen Fall wird zwecks Datenreduktion eine Interframecodierung angewandt. Im Interframe-Modus wird das Bildsignal entlang ermittelter Bewegungsvektoren vorhergesagt und das Differenzsignal zwischen Original- und Vorhersagesignal weitergeleitet. Im Intraframe-Modus wird das Eingangssignal selbst weitergeleitet. Die Blocksuchschaltung 31 ermittelt für jeden aktuellen Block einen Bewegungsvektor. Die Bewegungsvektor kann z.B. aus der minimaler Summe der Absolutwerte der Differenzen, der minimalen Summe der Wechselenergie oder minimaler Varianz ermittelt werden.

Anschließend an die Modusauswahlschaltung 23 wird das Signal einem diskreten Cosinustransformator 24 zugeführt. Dessen Ausgangssignal wird in einem Sortierer (Scanner) 25 sortiert und anschließend einer Wichtungsschaltung 26 und einem Quantisierer 27 zugeführt. Das Ausgangssignal des Quantisierers 27 wird sowohl einem Coder 28 als auch zur Rekonstruktion des Bildsignals über eine Schaltung zur inversen Wichtung 36, einen inversen Abtaster 35 und einen inversen diskreten Cosinustransformator 34 einer Blockrekonstruktionsschaltung 33 zugeführt, deren Ausgang mit einem Bildspeicher 32 verbunden ist.

Der Coder 28 erhält als Eingangssignal quantisierte gewichtete Transformationskoeffizienten in durch die Abtastung bestimmter Reihenfolge. Er führt zur Datenreduktion eine Codierung mit variabler Wortlänge durch und stellt als Ausgangssignal codierte Koeffizienten und Adressen bereit. Dies wird einem Videomultiplexer und Pufferspeicher 29 zugeführt.

Die in dem Bildspeicher 32 gespeicherten Daten sind Daten des vorangegangenen Bildes. Sie werden benötigt, um für einen aktuellen Block eine Bewegungsinformation zu ermitteln. Dazu wird ein z.B. 8*8 Bildpunkte umfassender Block des aktuellen Bildes in einem z.B. 16*16 Bildpunkte umfassenden Suchbereich des vorangehenden Bildes mit Hilfe des sogenannten Blockmatchings in seiner Lage innerhalb des 16*16 Blockes variiert, bis eine Stellung des aktuellen Blockes in dem vorangegangenen Block gefunden ist, bei der die geringsten Abweichungen festgestellt werden. Aus dieser sich ergebenden Lage wird ein Vektor ermittelt, der der Modusauswahlschaltung 23 und einem Coder 30 zugeführt wird. Dieser Coder 30 führt ebenfalls eine Codierung mit variabler Wortlänge durch und gibt den codierten Bewegungsvektor zur Zwischenspeicherung neben den entsprechenden Signaldaten an den Videomultiplexer und Pufferspeicher 29 weiter. Zur Steuerung der Quantisierung ist der Pufferspeicher 29 mit dem Quantisierer 27 verbunden.

Das Ergebnis der Modusauswahl wird dem Videomultiplexer und Pufferspeicher 29 und zur richtigen Blockrekonstruktion der Blockrekonstruktionsschaltung 33 zugeführt.

Das Ausgangssignal des Pufferspeichers 29 wird mit konstanter Datenrate dem zweiten Übertragungskanal zugeführt.

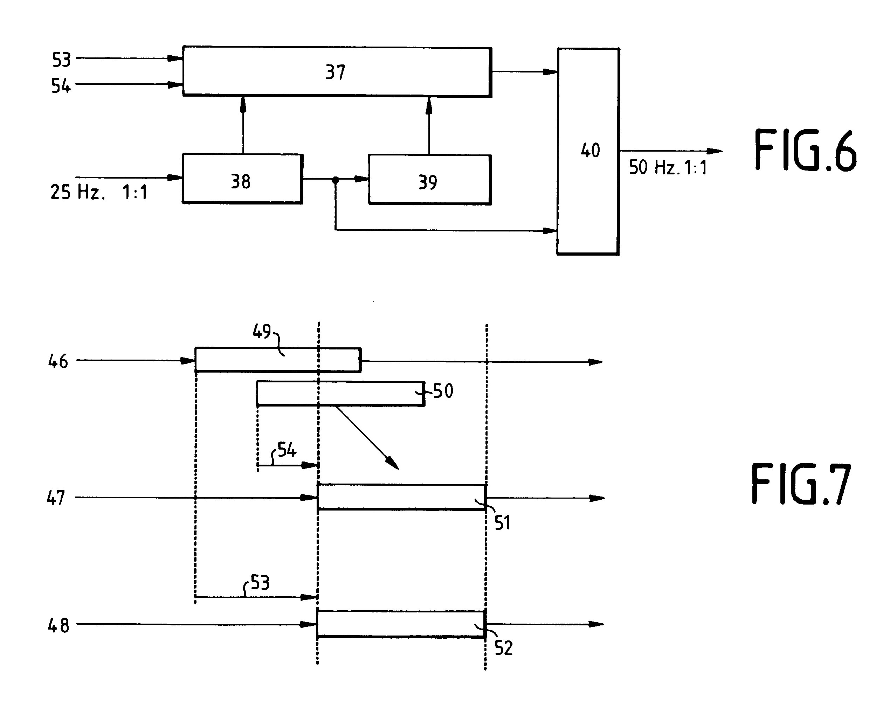

Fig. 5 zeigt den HD-Decoder 7 mit einem Pufferspeicher und Videodemultiplexer 15. Je ein Ausgang des Pufferspeichers 15 führt auf einen Decoder 16 bzw. 21. Ein Ausgang des Decoders 16 führt über eine inverse Wichtung 17, einen inversen Abtaster 18 und einen inversen diskreten Cosinustransformator 19 auf eine Blockrekonstruktionsschaltung 20. Der Ausgang der Blockrekonstruktionsschaltung 20 führt auf die Bildregenerationsschaltung 8 sowie zu einem Bild- oder Blockspeicher 22. Der Ausgang des Decoders 21 mit den decodierten Bewegungsvektoren führt ebenfalls auf einen weiteren Eingang des Bild- oder Blockspeichers 22.

Im Decoder 16 werden die Adressen und Koeffizienten wieder in ihre ursprüngliche Form decodiert. Gleiches führt der Decoder 21 für die Bewegungsvektoren durch.

Vom Pufferspeicher 15 führt eine Informationsleitung 54 zur Blockrekonstruktionsschaltung 20 mit der Information, ob der Block im Inter- oder im Intraframe-Modus codiert wurde. Eine weitere Leitung 56 führt vom Pufferspeicher 15 zum Decoder 16, die Pufferstand- und Information über den Quantisiererstatus übertragen.

Fig. 6 gibt die Bildregenerationsschaltung 8 wieder. Das Ausgangssignal des HD-Decoders 7 wird einem Bildspeicher 38 zugeführt. Ein Ausgang des Bildspeichers 38 führt zu einer Bildinterpolationsschaltung 37, ein weiterer Ausgang zu einem Bildspeicher 39 und einem Multiplexer 40. Weitere Eingänge der Bildinterpolationsschaltung 37 führen weitere Daten aus dem HD-Decoder 7, z.B. die Bewegungsvektoren 53 und die Codermodusinformation 54, also Information über Inter- bzw. Intraframecodierung. Ein Ausgang der Bildinterpolationsschaltung 37 führt auf den Multiplexer 40. Am Ausgang des Multiplexers 40 ist ein HD-Signal mit 1440*864 Bildpunkten, 50 Hz, 1:1 abgreifbar, im folgenden HDTV-TV-Signal genannt.

Die Funktionsweise des Bildregenerators 8, Fig. 6 ist in Fig. 7 anhand eines eindimensionalen Beispiels veranschaulicht.

Jedes vom HD-Decoder ausgegebene Bild 2n+1 wird im Bildspeicher 38 des Bildregenerators gespeichert, das vorher übertragene Bild 2n-1 wird im Bildspeicher 39 gehalten. Das dazwischenliegende Bild 2n wurde sendeseitig von der Bildunterdrükkungsschaltung 5 ausgelassen.

Fig. 7 zeigt die Signale an der Bildinterpolationsschaltung 37. Ein Eingang führt das Ausgangssignal 46 des Bildspeichers 39 mit der Bildinformation 49 und 50. Der zweite Eingang führt das Ausgangssignal 48 des Bildspeichers 38. Das Ausgangssignal 47 mit der Bildinformation 51 wird dem Multiplexer 40 zugeführt.

Wurde Block 52 des gerade bearbeiteten Bildes im Intraframe-Modus über den Kanal übertragen, so wird Block 51 des Zwischenbildes 2n aus dem Bild 2n-1 und dem Bild 2n+1 direkt auf Blockbasis durch punktweise Mittelung der Bildinhalte ermittelt. Dies ist in Fig. 7 nicht dargestellt.

Liegt hingegen eine Interframecodierung vor, so ist der Bewegungsvektor 53 des Blockes 52 aus dem HD-Decoder bekannt.

Für Block 51 des zu interpolierenden Bildes wird der um den halben Bewegungsvektor 54 versetzte Block 50 des Bildes 2n-1 (46) übernommen.

Weiterhin kann das Bild 2n durch bildpunktweise Interpolation der um den halben Bewegungsvektor entgegengesetzt verschobenen Bilder 2n-1 und 2n+1 erzeugt werden.

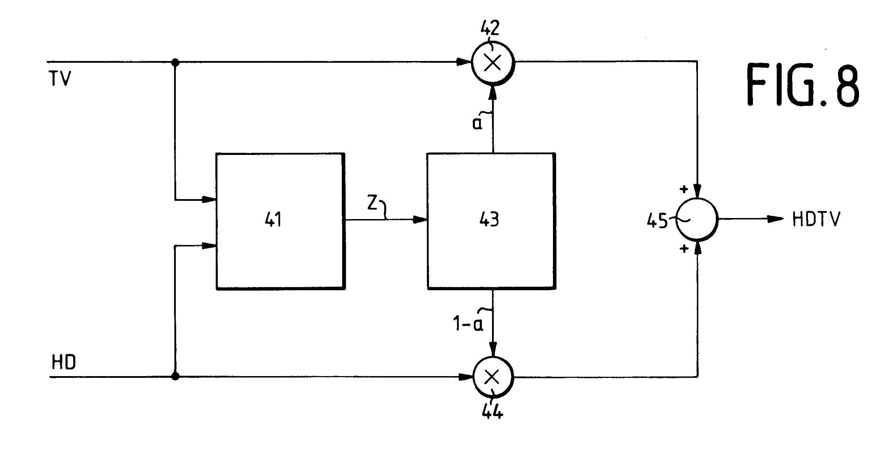

Fig. 8 zeigt das örtlich-zeitliche Filter 9. Das durch den Transcoder 4 erzeugte zeitlich hochaufgelöste, örtlich interpolierte und somit vom Format dem HDTV-Bild entsprechende TV-Bild wird einem Summierer 41 zugeführt. Das Ausgangssignal der Bildregenerationsschaltung 8 wird ebenfalls dem Summierer 41 zugeführt. Der Summierer 41 ermittelt über ein punktweise über ein n*n-Fenster die Summe der absoluten Grauwert-Differenzen der beiden unterschiedlich regenerierten Bildsignale. Die Summe bildet einen Wert Z je Fenstergröße n*n.

Aus dem Wert Z werden in der Schaltung 43 Faktoren zur Gewichtung der TV- und HD-Bildsignale ermittelt. So wird das TV-Signal in einem Multiplizierer 42 mit a, das HD-Signal in einem Multiplizierer 44 mit 1-a multipliziert. In Abhängigkeit vom Wert Z kann der Wichtungsfaktor a einen Wert zwischen 0 und 1 annehmen.

Ist der Wert Z groß, d.h. ist es im Bildregenerator 8, Fig. 6, durch große Bewegungen zu fehlerhaften Interpolationsergebnissen gekommen, so wird der Faktor a = 1 und somit die Bildinformation des TV-Signals übernommen. Ist der Wert Z hingegen sehr klein, d.h., liegt z.B. statischer Bildinhalt vor, so werden die Daten vom HD-Signal übernommen, da dieses von der Quelle bis zur Senke die originale örtlich hohe Auflösung repräsentiert.

Die Multiplikationsergebnisse der Multiplizierer werden einem Summierer 45 zugeführt, dessen Ausgangssignal dem Ursprungs-HDTV-Signal entspricht.

Die im zweiten Übertragungskanal übertragenen HD-Bilder werden direkt auf den Ausgang des Kombinationsfilters 9 gegeben, entsprechend a = 0 für das gesamte Bild.

Das Bildregenerationsverfahren wird durch empfängerseitige Auswertung beider Kanäle durchgeführt. Dazu werden die durch die voranstehenden Bildregenerationsverfahren erzeugten Bilder wie folgt kombiniert. Die Differenzen zwischen dem durch Transcodierung erzeugten zeitlich hochaufgelösten, örtlich interpolierten HDTV-TV-Signals, welches im Format dem HDTV-Bild entspricht, und dem durch Bildinterpolation erzeugten HDTV-HD-Bild werden Punkt für Punkt berechnet. Es werden punktweise über ein n*n-Fenster die Summe der absoluten Grauwert-Differenzen der beiden unterschiedlich regenerierten Bildsignale ermittelt und gewichtet. Durch die Wichtung wird ein Faktor a im Bereich von 0 bis 1 ermittelt. Die HDTV-TV- und HDTV-HD-Bildsignale werden wie folgt mit dem Gewichtungsfaktor a verknüpft: Das HDTV-TV-Signal wird mit dem Faktor a, das HDTV-HD-Signal mit dem Faktor 1-a multipliziert. Ist es bei der Bildregeneration des HDTV-HD-Signals infolge großer Bewegungen zu fehlerhaften Interpolationsergebnissen gekommen, so wird der Faktor a = 1 und somit die Bildinformation des HDTV-TV-Signals übernommen. Ist der Wert hingegen sehr klein, d.h., liegt z.B. statischer Bildinhalt vor, so werden die Daten vom HDTV-HD-Signal übernommen, da dieses von der Quelle bis zur Senke die originale örtlich hohe Auflösung repräsentiert.

Erfindungsgemäß wird der Gewichtungsfaktor a zu 1 gesetzt, wenn die gewichtete Summe der absoluten Grauwerte einen Schwellwert überschreiten, der kleiner 1 ist. Bis zu diesem Schwellwert steigt der Wert des Gewichtungsfaktors proportional von 0 auf 1 an.

Zusätzlich läßt sich die gewichtete Addition der beiden Kanäle durch ausgewertete HD-Decoderinformation, d.h. Information über den Übertragungsmodus den Quantisierungsstatus oder die Bewegung des Blocks, verbessern.

**Patentansprüche**

1. Verfahren zur Übertragung eines senderseitig gewonnenen, zeitlich und örtlich hochaufgelösten Bildsignals großer Bandbreite über zwei Übertragungskanäle geringerer Bandbreite, wobei ein erster Übertragungskanal ein erstes, vollständiges Bildsignal einer bekannten Norm geringer örtlicher und hoher zeitlicher Auflösung überträgt, **dadurch gekennzeichnet,** daß ein zweiter Übertragungskanal ein zweites, vollständiges, örtlich hochaufgelöstes und zeitlich niedrig aufgelöstes, codiertes Bildsignal überträgt, das von einem verbesserten Empfänger alleine oder kombiniert mit dem ersten Bildsignal decodiert und wiedergegeben werden kann, wobei das erzeugte Bildsignal dem zu übertragenden und wiederzugebenden zeitlich und örtlich hochaufgelösten Bildsignal entspricht und wobei das erste Bildsignal von einem Standard-Empfänger decodiert und wiedergegeben werden kann.

2. Verfahren nach Anspruch 1, **dadurch gekennzeichnet,** daß der zweite Übertragungskanal höchstens jedes n-te Bild des zweiten Bildsignals überträgt, mit n = 2,3,4,..., .

3. Verfahren nach Anspruch 2, **dadurch gekennzeichnet,** daß das zweite Bildsignal zur Datenreduktion digital codiert übertragen wird, wobei insbesondere Bewegungsvektoren ermittelt werden und zusammen mit einer Information über die Codierungsart übertragen werden.

4. Verfahren nach einem oder mehreren der Ansprüche 1 bis 3, **dadurch gekennzeichnet,** daß eine Zusatzinformation im zweiten Übertragungskanal übertragen wird, die eine Information über den ersten Übertragungskanal enthält.

5. Verbesserter Empfänger für ein Verfahren nach einem oder mehreren der Ansprüche 1 bis 4, **dadurch gekennzeichnet,** daß der Empfänger einen HD-Decoder (7) und eine nachgeschaltete Bildregenerationsschaltung (8, 37) enthält, die das zweite Bildsignal alleine decodieren und in Verbindung mit einer nachfolgenden Kombination mit dem decodierten ersten Bildsignal zu einem örtlich und zeitlich hochaufgelösten Bildsignal decodieren und dabei eine Bildpunkt-Blockrekonstruktion durchführen entsprechend der Codierungsart des zweiten Bildsignals, wobei der Bildregenerationsschaltung (8, 37) auch übertragene Bewegungsvektoren zugeführt werden.

6. Empfänger nach Anspruch 5, **dadurch gekennzeichnet,** daß die Bildregenerationsschaltung (8, 37) mittels decodierter Codermodusinformation (54) und/oder Daten der Bewegungsvektoren (53) aus dem empfangenen decodierten zweiten Bildsignal ein Bildsignal mit erhöhter Bildfolgefrequenz erzeugt.

7. Empfänger nach Anspruch 6, **dadurch gekennzeichnet,** daß zur Erzeugung eines Bildes 2n blockweise das um den halben Bewegungsvektor verschobene Bild 2n-1 oder 2n + 1 eingesetzt wird, wobei n = 1,2,3,4,..., .

8. Empfänger nach Anspruch 6, **dadurch gekennzeichnet,** daß zur Erzeugung eines Bildes 2n die um den halben Bewegungsvektor entgegengesetzt verschobenen Bilder 2n-1 und 2n + 1 bildpunktweise interpoliert werden, wobei n = 1,2,3,4,..., .

9. Empfänger nach Anspruch 6, **dadurch gekennzeichnet,** daß bei einer Intraframecodierung zur Erzeugung von Bildpunkten eines Bildes 2n entsprechende Bildpunkte aus entsprechenden decodierten Bildpunkt-Blöcken der Bilder 2n-1 und 2n + 1 gemittelt werden, wobei n = 1,2,3,4,..., .

10. Empfänger nach einem oder mehreren der Ansprüche 5 bis 10, **dadurch gekennzeichnet,** daß der Empfänger einen Transcoder (4) mit einen Deinterlacer (12) enthält, die aus dem ersten Bildsignal durch teilbildabhängige Zeilenübernahme und Interpolation Bilder ohne Zeilensprung erzeugen.

11. Empfänger nach Anspruch 10, **dadurch gekennzeichnet,** daß der Transcoder (4) hintereinandergeschaltet ein vertikales Transcoderfilter (13) und ein horizontales Transcoderfilter (14) zur Abtastratenwandlung enthält.

12. Empfänger nach einem oder mehreren der Ansprüche 5 bis 11, **dadurch gekennzeichnet,** daß ein örtlich-zeitliches Filter (9) einen Summierer (41) enthält, dessen Eingänge mit den Ausgängen der Bildregenerationsschaltung (8) und des Transcoders (4) verbunden sind, daß das Ausgangssignal (Z) des Summierers (41) einer Gewichtungsschaltung (43) zugeführt wird, daß ein erster Mul-tiplizierer (42) mit den Ausgangssignalen des Transco-ders (4) und der Gewichtungsschaltung (43) und ein zweiter Multiplizierer (44) mit den Ausgangssignalen der Bildregenerationsschaltung (8) und der Gewichtungs-schaltung (43) verbunden ist und die Ausgänge der Multiplizierer (42, 44) über einen Addierer (45) verbunden sind.

13. Empfänger nach Anspruch 12, **dadurch gekennzeichnet,** daß zur Vermeidung von Bewegungsdefekten sowie zur Übernahme der örtlichen Auflösung des decodierten zweiten Bildsignals innerhalb von Bildpunkt-Blöcken bildpunktweise die absoluten Grauwertdifferenzen zwischen den Bildpunkten des jeweiligen Bildpunkt-Blocks des Bildes 2n und den Bildpunkten des jeweiligen Bildpunkt-Blocks aus dem aus dem ersten Bildsignal rekonstruierten Bild 2n-1 ohne Zeilensprung über ein Fenster aufsummiert werden und daraus ein Gewichtungsfaktor a für jeden Bildpunkt des Bildes 2n ermittelt wird, wobei n = 1,2,3,4,..., .

14. Empfänger nach Anspruch 13, **dadurch gekennzeichnet,** daß das aus dem ersten Bildsignal erzeugte Bild ohne Zeilensprung mit dem zwischen den Werten 0 und 1 liegenden Gewichtungsfaktor a und das Bild 2n mit 1-a bildpunktweise multipliziert wird.

15. Empfänger nach Anspruch 14, **dadurch gekennzeichnet,** daß der Gewichtungsfaktor a den Wert 1 hat, wenn die gewichtete Summe der absoluten Grauwertdifferenzen oberhalb einer Schwelle liegt.

16. Empfänger nach Anspruch 15, **dadurch gekennzeichnet,** daß unterhalb dieser Schwelle der Gewichtungsfaktor a proportional zur gewichteten Summe der absoluten Grauwertdifferenzen ansteigt.

17. Empfänger nach Anspruch 13, **dadurch gekennzeichnet,** daß zur Ermittlung des Gewichtungsfaktors a zusätzliche Daten aus den HD-Decoder (7) herangezogen werden, insbesondere über den Übertragungsmodus, den Quantisierungsstatus und/oder Bewegungsinformation.

18. Empfänger nach einem oder mehreren der Ansprüche 5 bis 17, **dadurch gekennzeichnet,** daß eine Auswerteschaltung für die Zusatzinformation vorhanden ist, die bei Empfang des zweiten Übertragungskanals den ersten Übertragungskanal automatisch zuschaltet.

19. Empfänger nach Anspruch 18, **dadurch gekennzeichnet,** daß der Empfänger zwei Empfangseinrichtungen enthält.

## Claims

1. Method for the transmission of a wide bandwidth, temporally and spatially high resolution image signal obtained at the transmitter end over two transmision channels of narrower bandwidth, wherein a first transmission channel transmits a first complete image signal of a known norm of low spatial and high temporal resolution, characterised in that, a second transmission channel transmits a second complete spatially high resolution and temporally low resolution coded image signal which, alone or combined with the first image signal, can be decoded and reproduced by an improved receiver, wherein the generated image signal corresponds to the temporally and spatially high resolution image signal which is to be transmitted and reproduced and wherein the first image signal can be decoded and reproduced by a standard receiver.

2. Method according to Claim 1, characterised in that, the second transmission channel transmits at most each nth frame of the second image signal where n = 2, 3, 4, ..., .

3. Method according to Claim 2, characterised in that, the second image signal is transmitted digitally coded for the purpose of data compression, wherein, in particular, motion vectors are determined and are transmitted together with an information regarding the type of coding.

4. Method according to any one or more of Claims 1 to 3, characterised in that, an additional information which contains information regarding the first transmission channel is transmitted in the second transmission channel.

5. Improved receiver for a method according to any one or more of Claims 1 to 4, characterised in that, the receiver incorporates a HD decoder (7) and a following frame regeneration circuit (8, 37), which decode the second image signal alone, and, in conjunction with a subsequent combination with the decoded first image signal decode into a temporally and spatially high resolution image signal and in so doing carry out a picture element block reconstruction in accordance with the type of coding of the second image signal, wherein transmitted motion vectors are also supplied to the frame regeneration circuit (8, 37).

6. Receiver according to Claim 5, characterised in that, the frame regeneration circuit (8, 37) generates an image signal having increased frame frequency from the received decoded second signal by means of decoded mode information (54) and/or data of the motion vectors (53).

7. Receiver according to Claim 6, characterised in that, for the generation of a frame 2n, the frame 2n-1 or 2n + 1 displaced blockwise by half the motion vector is utilised, wherein n = 1, 2, 3, 4, ..., .

8. Receiver according to Claim 6, characterised in that, for the generation of a frame 2n, the frames 2n-1 and 2n + 1 oppositely displaced by half the motion vector are interpolated on a picture element basis, wherein n = 1, 2, 3, 4, ..., .

9. Receiver according to Claim 6, characterised in that, with an intra- frame coding, for the generation of picture elements of a frame 2n, corresponding picture elements from corresponding decoded picture element blocks of the frames 2n-1 and 2n + 1 are averaged, wherein n = 1, 2, 3, 4, ..., .

10. Receiver according to any one or more of Claims 5 to 10, characterised in that, the receiver incorporates a transcoder (4) with a de-interlacer (12) which generates non-interlaced frames from the first image signal by extraction of frame dependent lines and interpolation.

11. Receiver according to Claim 10, characterised in that, the transcoder (4) incorporates, connected one after the other, a vertical transcoder filter (13) and a horizontal transcoder filter (14) for the sampling rate conversion.

12. Receiver according to any one or more of Claims 5 to 11, characterised in that, a space - time filter (9) incorporates an adder (41) whose inputs are connected to the outputs of the frame regeneration circuit (8) and the transcoder (4), that the output signal (Z) of the adder (41) is supplied to a weighting circuit (43), that a first multiplier (42) is connected to the output signals of the transcoder (4) and the weighting circuit (43) and a second multiplier (44) to the output signals of the frame regeneration circuit (8) and the weighting circuit (43) and the outputs of the multipliers (42, 44) are connected via an adder (45).

13. Receiver according to Claim 12, characterised in that, for the avoidance of movement defects as well as for the adoption of the spatial resolution of the decoded second image signal, within picture element blocks on a picture element basis, the absolute grey differences between the picture elements of the current picture element block of the frame 2n and the picture elements of the current picture element block of the frame 2n -1 reconstructed from the first image signal are added without interlacing via a window and therefrom a weighting factor a is determined for each picture element of the frame 2n, wherein n = 1, 2, 3, 4, ..., .

14. Receiver according to Claim 13, characterised in that, the non-interlaced frame generated from the first image signal is multiplied on a picture element basis by the weighting factor a lying between 0 and 1 and the frame 2n by 1-a.

15. Receiver according to Claim 14, characterised in that, the weighting factor a has the value 1 when the weighted sum of the absolute grey differences lies above a threshold.

16. Receiver according to Claim 15, characterised in that, below this threshold, the weighting factor a rises proportionally to the weighted sum of the absolute grey differences.

17. Receiver according to Claim 13, characterised in that, for the determination of the weighting factor a, additional data from the HD decoder (7) is drawn upon, in particular regarding the transmission mode, the quantisation status and/or movement information.

18. Receiver according to any one or more of Claims 5 to 17, characterised in that, an evaluating circuit for the additional information is provided which upon reception of the second transmission channel automatically switches in the first transmission channel.

19. Receiver according to Claim 18, characterised in that, the receiver incorporates two receiving devices.

**Revendications**

1. Procédé pour la transmission d'un signal d'image à haute définition dans le temps et local, obtenu côté émetteur, de grande largeur de bande, par deux canaux de transmission de faible largeur de bande, un premier canal de transmission transmettant un premier signal d'image complet d'une norme connue de faible définition locale et de grande définition dans le temps, **caractérisé en ce** qu'un second canal de transmission transmet un second signal d'image codé complet, à haute définition locale et à faible définition dans le temps qui peut être décodé et reproduit par un récepteur amélioré seul ou combiné au premier signal d'image, le signal d'image produit correspondant au signal d'image à haute définition locale et dans le temps qui doit être transmis et reproduit et le premier signal d'image pouvant être décodé et reproduit par un récepteur standard.

2. Procédé selon la revendication 1, **caractérisé en ce** que le second canal de transmission transmet au plus chaque n-ième image du second signal d'image, avec n = 2, 3, 4, ..., .

3. Procédé selon la revendication 2, **caractérisé en ce** que le second signal d'image est transmis en étant codé numériquement pour la réduction des données, des vecteurs de mouvement étant en particulier déterminés et transmis ensemble avec une information sur le type de codage.

4. Procédé selon l'une ou plusieurs des revendications 1 à 3, **caractérisé en ce** qu'une information supplémentaire est transmise dans le second canal de transmission qui contient une information sur le premier canal de transmission.

5. Récepteur amélioré pour un procédé selon l'une ou plusieurs des revendications 1 à 4, **caractérisé en ce** que le récepteur contient un décodeur HD (7) et un circuit de régénération d'images placé en aval (8, 37) qui décodent le second signal d'image seul et en liaison avec une combinaison qui suit avec le premier signal d'image décodé en un signal d'image à haute définition locale et dans le temps et qui effectuent ainsi une reconstruction de blocs de points d'image conformément au type de codage du second signal d'image, des vecteurs de mouvement transmis étant également amenés au circuit de régénération d'images (8, 37).

6. Récepteur selon la revendication 5, **caractérisé en ce** que le circuit de régénération d'images (8, 37) produit un signal d'image avec une fréquence d'image accrue à partir du second signal d'image décodé reçu au moyen d'information décodée sur le mode de codage (54) et/ou des données des vecteurs de mouvement (53).

7. Récepteur selon la revendication 6, **caractérisé en ce** que l'image 2n-1 ou 2n + 1 décalée du demi vecteur de mouvement est utilisée pour produire une image 2n bloc par bloc, n étant égal à 1, 2, 3, 4, ..., .

8. Récepteur selon la revendication 6, **caractérisé en ce** que des images 2n-1 et 2n + 1, décalées en étant opposées du demi vecteur de mouvement, sont interpolées point d'image par point d'image pour produire une image 2n, n étant égal à 1, 2, 3, 4, ..., .

9. Récepteur selon la revendication 6, **caractérisé en ce** que des points d'image correspondants sont déterminés lors d'un codage intra-trames pour produire des points d'image d'une image 2n à partir de blocs de points d'image décodés correspondants des images 2n-1 et 2n + 1, n étant égal à 1, 2, 3, 4, ..., .

10. Récepteur selon l'une ou plusieurs des revendications 5 à 10, **caractérisé en ce** que le récepteur contient un transcodeur (4) avec un désentrelaceur (12) qui produisent des images sans entrelacement à partir du premier signal image par transfert de ligne en fonction de la trame et interpolation.

11. Récepteur selon la revendication 10, **caractérisé en ce** que le transcodeur (4) contient un filtre vertical de transcodeur (13) et un filtre horizontal de transcodeur (14) montés en série pour la conversion de la vitesse de balayage.

12. Récepteur selon l'une ou plusieurs des revendications 5 à 11, **caractérisé en ce** qu'un filtre local-temporel (9) contient un additionneur (41) dont les entrées sont reliées aux sorties du circuit de régénération d'images (8) et du transcodeur (4), que le signal de sortie (Z) de l'additionneur (41) est amené à un circuit de pondération (43), qu'un premier multiplicateur (42) est relié aux signaux de sortie du transcodeur (4) et du circuit de pondération (43) et qu'un second multiplicateur (44) est relié aux signaux de sortie du circuit de régénération d'images (8) et du circuit de pondération (43) et que les sorties des multiplicateurs (42, 44) sont reliées par un additionneur (45).

**13.** Récepteur selon la revendication 12, **caractérisé en ce** que, pour éviter des défauts de mouvement ainsi que pour adopter la résolution locale du second signal d'image décodé les différences absolues des valeurs de gris entre les points d'image du bloc respectif de points d'image de l'image 2n et les points d'image du bloc respectif de points d'image de l'image 2n-1 sans entrelacement reconstruite à partir du premier signal d'image sont aditionnées à l'intérieur de blocs de points d'image point d'image par point d'image par une fenêtre et qu'un facteur de pondération a est déterminé à partir de ceci pour chaque point d'image de l'image 2n, n étant égal à 1, 2, 3, 4, ... , .

**14.** Récepteur selon la revendication 13, **caractérisé en ce** que l'image produite sans entrelacement à partir du premier signal d'image est multipliée par le facteur de pondération a qui se situe entre les valeurs 0 et 1 et l'image 2n par 1-a point d'image par point d'image.

**15.** Récepteur selon la revendication 14, **caractérisé en ce** que le facteur de pondération a a la valeur 1 lorsque la somme pondérée des différences absolues des valeurs de gris se situe au-dessus d'un seuil.

**16.** Récepteur selon la revendication 15, **caractérisé en ce** qu'au-dessous de ce seuil le facteur de pondération a augmente proportionnellement à la somme pondérée des différences absolues des valeurs de gris.

**17.** Récepteur selon la revendication 13, **caractérisé en ce** que des données supplémentaires provenant du décodeur HD (7) sont utilisées pour déterminer le facteur de pondération a, en particulier sur le mode de transmission, l'état de quantification et/ou l'information de mouvement.

**18.** Récepteur selon l'une ou plusieurs des revendications 5 à 17, **caractérisé en ce** qu'il existe un circuit d'exploitation pour l'information supplémentaire qui met automatiquement en circuit le premier canal de transmission lors de la réception du second canal de transmission.

**19.** Récepteur selon la revendication 18, **caractérisé en ce** que le récepteur contient deux dispositifs de réception.

# FIG.1

# FIG.2

# FIG.3

EP 0 359 094 B1

FIG.4

FIG.5

EP 0 359 094 B1

FIG.6

FIG.7

EP 0 359 094 B1

FIG.8